**Europäisches Patentamt**

**European Patent Office**

**Office européen des brevets**

(19)

(11) Numéro de publication: **0 219 392**
**B1**

(12)

# FASCICULE DE BREVET EUROPEEN

(45) Date de publication du fascicule du brevet:
**21.02.90**

(51) Int. Cl.⁴: **G06F 15/332**, G01S 13/28

(21) Numéro de dépôt: **86402032.6**

(22) Date de dépôt: **17.09.86**

(54) **Dispositif de calcul d'une transformée de Fourier discrète, glissante et non récursive, et son application à un système radar.**

(30) Priorité: **24.09.85 FR 8514136**

(43) Date de publication de la demande:
**22.04.87 Bulletin 87/17**

(45) Mention de la délivrance du brevet:
**21.02.90 Bulletin 90/8**

(84) Etats contractants désignés:
**DE GB IT NL SE**

(56) Documents cités:
**DE-A- 2 732 643**

(73) Titulaire: **THOMSON-CSF, 51, Esplanade du Général de Gaulle, F-92800 Puteaux(FR)**

(72) Inventeur: **Elleaume, Philippe Thomson - CSF SCPI, 19 Avenue de Messine, F-75008 Paris(FR)**

(74) Mandataire: **Benoit, Monique et al, THOMSON-CSF SCPI, F-92045 PARIS LA DEFENSE CEDEX 67(FR)**

## Description

La présente invention a pour objet un dispositif de calcul d'une transformée de Fourier discrète et glissante, c'est-à-dire une transformée de Fourier discrète appliquée à un signal selon une fenêtre glissant dans le temps.

L'invention a également pour objet l'application de ce dispositif de calcul à un système radar.

Ainsi qu'il est connu, de nombreuses applications font appel au calcul de la transformée de Fourier et, parmi elles, les opérations de filtrage qu'on réalise dans un système radar sur le signal reçu. Par ailleurs, les évolutions technique et technologique actuelles conduisent de plus en plus à rechercher des solutions numériques pour ces traitements. Dans cette recherche, une des difficultés rencontrées est celle des puissances de calcul nécessaires. Ce problème est particulièrement aigu dans les applications comme les systèmes radars où les calculs doivent être faits en temps réel.

La présente invention a pour objet un dispositif de calcul de transformée de Fourier discrète, sur une fenêtre temporelle glissante, permettant de s'affranchir de l'influence de la précision des calculs réalisés à chaque étape. Cela est obtenu par l'utilisation d'un processus de calcul dans lequel sont éliminées les erreurs dues à la récursivité, processus appelé ici "non récursif" pour simplifier.

A cet effet, le dispositif selon l'invention comporte un ou plusieurs étages identiques recevant des échantillons (x) du signal d'entrée, chacun des étages fournissant un signal (X) de la forme :

$$X^m_k = X'^m_k \cdot \exp\left\{ j.2\pi. \frac{m.k}{N} \right\} \tag{1}$$

avec :

$$X'^{m+1}_k = X'^m_k + x'_{m+N} - x'_m \tag{2}$$

$$x'_m = x_m \cdot \exp\left\{ - j.2\pi. \frac{m.k}{N} \right\} \tag{3}$$

où $k$ est l'indice de l'étage, $m$ l'indice de la fenêtre et N le nombre d'échantillons dans la fenêtre, à l'aide d'opérateurs de rotation complexes, d'additionneurs soustracteurs et de circuits de retard.

L'invention a également pour objet l'application de ce dispositif à la réalisation de la compression d'impulsion dans une chaîne de traitement de signal radar.

D'autres objets, particularités et résultats de l'invention ressortiront de la description suivante, donnée à titre d'exemple non limitatif et illustrée par les dessins annexés, qui représentent:

- la figure 1, le schéma synoptique du dispositif de calcul selon l'invention ;
- la figure 2, le schéma de l'un des opérateurs utilisés dans la figure précédente ;
- la figure 3, le schéma synoptique d'un récepteur radar et de la chaîne de traitement de signal y relative ;
- la figure 4, un diagramme explicatif ;
- la figure 5, le schéma de l'application du dispositif selon l'invention à la compression d'impulsion dans une chaîne de traitement de signal radar.

Sur ces différentes figures, les mêmes références se rapportent aux mêmes éléments.

Avant de décrire dans le détail les figures montrant la réalisation du dispositif de calcul selon l'invention, on procède ci-après à quelques rappels sur la transformée de Fourier discrète.

On rappelle que la transformée de Fourier discrète, également connue sous les initiales DFT (de l'équivalent anglais "Discrete Fourier Transform"), permet de faire correspondre à N échantillons d'un signal x(t) variant dans le temps, un ensemble de N composantes fréquentielles $X_k$, avec $k$ variant de 0 à N-1 ; si on désigne par $x_n$ l'échantillon d'ordre $n$ ($0 \leq n \leq$ N-1) du signal x(t), l'échantillonnage étant effectué avec une période $\tau$ et sur une fenêtre temporelle de durée T, avec T = N.$\tau$, la correspondance est de la forme :

$$X_k = \sum_{n=0}^{N-1} x_n \cdot \exp\left\{ - j.2\pi. \frac{k.n}{N} \right\} \,,$$

la transformée inverse s'écrivant, ainsi qu'il est connu :

$$x_n = \sum_{k=0}^{N-1} X_k \cdot \exp\left\{+ j.2\pi. \frac{k.n}{N}\right\}$$

Lorsqu'on désire appliquer une telle transformée de Fourier à un signal $x(t)$ sur une fenêtre temporelle de N points glissant dans le temps, on obtient pour les composantes X, pour une fenêtre d'indice $\underline{m}$, l'expression suivante :

$$X_k^m = \sum_{n=0}^{N-1} x_{m+n} \cdot \exp\left\{- j.2\pi. \frac{k.n}{N}\right\} \qquad (4)$$

Il apparaît que le calcul de ces composantes nécessite de nombreuses opérations et, par suite, une puissance de calcul importante. Comme indiqué ci-dessus, le problème se pose de façon d'autant plus aiguë que dans certaines applications, comme les systèmes radar, ces calculs doivent être faits en temps réel.

Le calcul montre que les opérations nécessaires étaient pour partie redondantes et qu'on peut élaborer un algorithme de calcul qui minimise le nombre d'opérations nécessaires. Cet algorithme permet d'obtenir le terme

$$X_k^{m+1}$$

à partir de l'échantillon $x_m$ du signal et du terme précédemment calculé

$$(X_k^m)$$

de la façon suivante :

$$X_k^{m+1} = \{X_k^m + x_{m+N} - x_m\} \cdot \exp\left\{+ j.2\pi. \frac{k}{N}\right\} \qquad (5)$$

Démonstration : En partant de l'expression (4) ci-dessus et en l'appliquant à une fenêtre ayant glissé d'une période d'échantillonnage (fenêtre d'indice m+1), on obtient :

$$X_k^{m+1} = \sum_{n=0}^{N-1} x_{m+1+n} \cdot \exp\left\{- j.2\pi. \frac{k.n}{N}\right\}$$

On effectue le changement de variable suivant :
$n' = n + 1$
d'où :

$$X_k^{m+1} = \sum_{n'=1}^{N} x_{m+n'} \cdot \exp\left\{- j.2\pi. \frac{k.(n'-1)}{N}\right\}$$

ou encore :

$$X_k^{m+1} = \left[\sum_{n'=1}^{N} x_{m+n'} \cdot \exp\left\{-j.2\pi.\frac{k.n'}{N}\right\}\right] \cdot \exp\left\{+j.2\pi.\frac{k}{N}\right\}$$

$$= \left[\sum_{n'=0}^{N-1} x_{m+n'} \cdot \exp\left\{-j.2\pi.\frac{k.n'}{N}\right\} - x_m \cdot \exp\left\{-j.2\pi.\frac{k.0}{N}\right\}\right.$$

$$\left. + x_{m+N} \cdot \exp\left\{-j.2\pi.\frac{k.N}{N}\right\}\right] \cdot \exp\left\{+j.2\pi.\frac{k}{N}\right\}$$

$$= \{X_k^m + x_{m+N} - x_m\} \cdot \exp\left\{+j.2\pi.\frac{k}{N}\right\}$$

ce qui est l'expression (5) ci-dessus.

Une telle expression est du type récursif c'est-à-dire que la (m+1)ième valeur de la grandeur

$$X_k^{m+1}$$

dépend de la valeur obtenue pour la grandeur précédente

$$X_k^m.$$

Dans certains cas, il peut être préférable de s'affranchir de l'exigence de précision de calcul à chaque étape, fût-ce au prix d'une légère augmentation du volume de calcul à effectuer.

Des calculs réalisés par la Déposante montrent que l'expression (5) ci-dessus peut être exprimée sous la forme du système d'équations (1), (2) et (3) mentionné plus haut.

Démonstration : On peut dans l'expression (5) effectuer le changement de variable suivant :

$$X'^m_k = X^m_k \cdot \exp\left\{-j.2\pi.\frac{m.k}{N}\right\}$$

c'est-à-dire que, inversement :

$$X^m_k = X'^m_k \cdot \exp\left\{+j.2\pi.\frac{m.k}{N}\right\}\ ,$$

qui est l'équation (1) ci-dessus.

En reportant dans l'expression (5), on obtient :

$$X'^{m+1}_k \cdot \exp\left\{j.2\pi.\frac{(m+1)k}{N}\right\} = \left[X'^m_k \cdot \exp\left\{j.2\pi\frac{m.k}{N}\right\} + x_{m+N} - x_m\right]$$

$$\cdot \exp\left\{j.2\pi.\frac{k}{N}\right\}$$

ou encore :

$$X'^{m+1}_k = X'^m_k + x_{m+N} \cdot \exp\left\{-j.2\pi.\frac{m.k}{N}\right\} - x_m \cdot \exp\left\{-j.2\pi.\frac{m.k}{N}\right\}$$

Si l'on pose le changement de variable suivant :

$$x'_m = x_m \cdot \exp\{ - j.2\pi. \frac{m.k}{N} \} \quad ,$$

qui est l'équation (3) ci-dessus, on retrouve l'expression suivante, qui est l'équation (2) ci-dessus :

$$X'^{m+1}_k = X'^{m}_k + x'_{m+N} - x'_m$$

Il apparaît ainsi que l'ensemble des équations (1), (2) et (3) forme une nouvelle expression de la DFT glissante dans laquelle il n'existe plus d'erreur introduite par la récursivité.

En effet, dans l'expression (5) ci-dessus, tous les facteurs, et particulièrement l'échantillon entrant $(x_{m+n})$ et l'échantillon sortant $(x_m)$ de la fenêtre, sont multipliés par l'exponnentielle complexe exp

$$\{ j.2\pi. \frac{k}{N} \}$$

qu'on ne sait pas calculer exactement en pratique. Au contraire, dans l'expression (2), qui est la seule du système d'équation (1) à (3) à être du type récursif, les termes "entrant" $(x'_{m+n})$ et "sortant" $(x'_m)$ sont indépendants de l'exponnentielle complexe précédente et leur valeur, une fois obtenue, reste constante pendant toute la durée du passage de la fenêtre, éliminant ainsi les effets de l'erreur sur leur calcul.

De la sorte, bien que le processus soit toujours de type récursif, il n'existe plus dans son exécution d'erreur introduite par la récursivité. Pour cette raison ce processus est appelé ici "non récursif, pour simplifier.

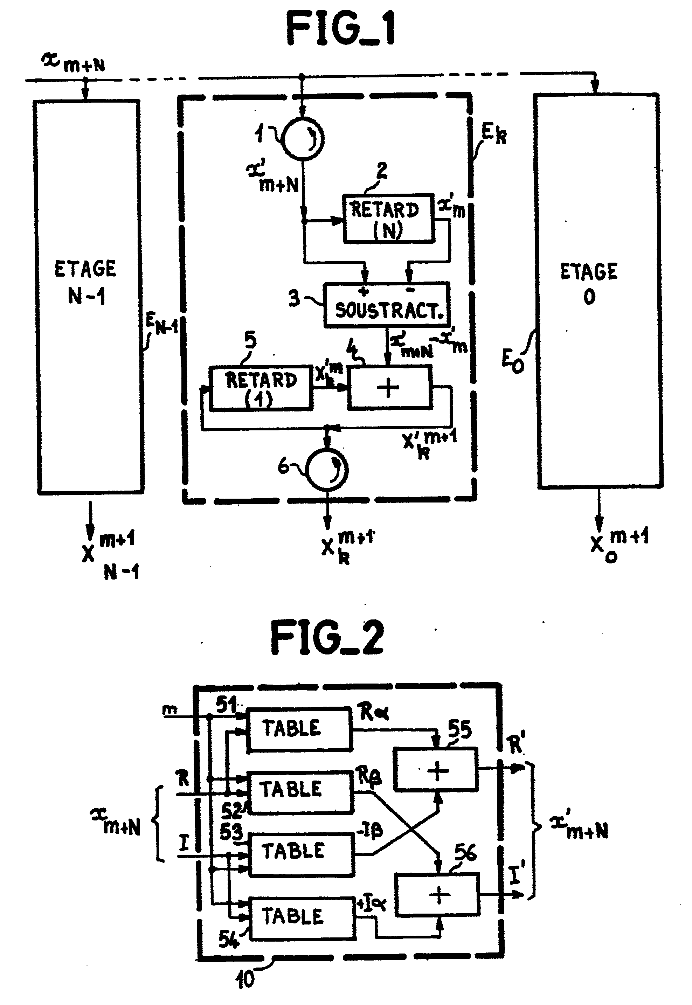

La figure 1 représente un dispositif assurant le calcul d'une DFT glissante "non récursive" telle que définie par les équations (1), (2) et (3).

Sur cette figure 1, on trouve un ensemble de N étages répérés $E_0....E_k....E_{N-1}$, recevant chacun un échantillon $x_{m+N}$ du signal $x(t)$ sur lequel on désire réaliser une transformation de Fourier . Chacun des étages fournit en sortie un signal $X^{m+1}$ , portant l'indice (0...k...N-1) de l'étage.

Les différents étages sont identiques. La constitution des étages a été représentée pour l'un deux, d'indice k.

Chaque étage comporte donc successivement un opérateur 1 de rotation complexe, qui reçoit l'échantillon $x_{m+N}$ et qui fournit en sortie le signal $x'_{m+N}$ tel que défini par l'équation (3). Ce dernier signal est fourni à un soustracteur 3, d'une part directement sur l'entrée positive de ce soustracteur et, d'autre part, sur l'entrée négative de ce dernier par l'intermédiaire d'un circuit de retard 2. Ce dernier confère un retard de N périodes d'échantillonnage au signal $x'_{m+N}$ : le signal de sortie du circuit 2 est alors noté $x'_m$. Le circuit de retard 2 est par exemple réalisé à l'aide d'un registre à décalage à N étages. Le signal de sortie du soustracteur 3, qui est alors de la forme $x'_{m+N} - x'_m$, est fourni à un additionneur 4 qui reçoit par ailleurs son propre signal de sortie tel qu'il a été élaboré à l'étape précédente, c'est-à-dire que la sortie de l'additionneur 4 est reliée à son entrée par l'intermédiaire d'un circuit de retard 5 ; ce signal de sortie est le signal

$$X'^{m+1}_k$$

ainsi que défini par l'équation (2). Ce signal de sortie de l'additionneur 4 est fourni par ailleurs à un second opérateur de rotation complexe repéré 6, qui permet à partir du signal

$$X'^{m+1}_k$$

d'obtenir le signal

$$X^{m+1}_k$$

comme défini par l'équation (1) ci-dessus, en lui faisant subir une rotation complexe exp

$$\{ j.2\pi.k. \frac{m+1}{N} \} \; .$$

Il est à noter que, lors de l'initialisation du dispositif, lorsqu'est reçu le premier échantillon ($x_0$), tous les opérateurs et registres doivent être à zéro.

Un tel dispositif de calcul peut être utilisé par exemple pour réaliser l'analyse spectrale d'un signal $x(t)$ en en fournissant ses N composantes fréquencielles $X_k$.

Il est à noter également qu'un tel dispositif peut ne comporter qu'un seul étage E. Une application pratique en est par exemple la réalisation du filtre adapté à un nombre entier de périodes d'une sinusoïde de fréquence donnée, comme explicité ci-après.

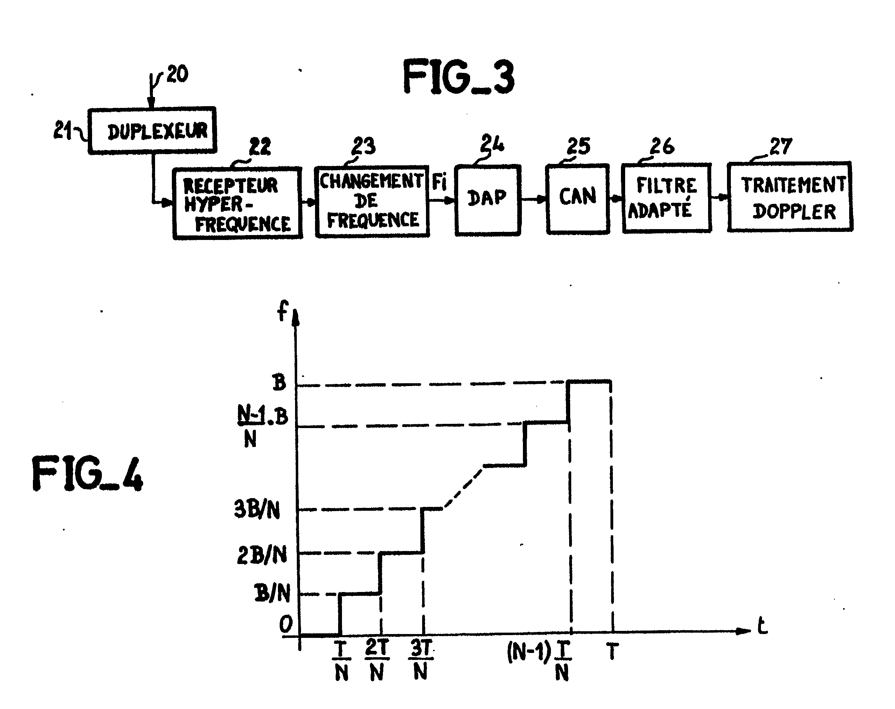

La figure 2 représente un mode de réalisation des opérateurs de rotation complexe utilisés dans le dispositif selon l'invention, par exemple l'opérateur 1 de la figure 1.

La donnée $x_{m+N}$ d'entrée de l'opérateur 1 est représentée distinctement par sa partie réelle et sa partie imaginaire, notées respectivement R et I.

Il est à noter que, dans l'ensemble des circuits décrits ici à titre d'exemple, les grandeurs complexes sont exprimées sous forme partie réelle - partie imaginaire, soit sous forme parallèle (exemple de la figure 2), soit sous forme série.

Ainsi qu'il est connu, opérer une rotation complexe exp

$$\{j.2\pi.\frac{k.m}{N}\}$$

sur une grandeur complexe $R + j\,I$ revient à effectuer le produit :
$(R + j\,I).(\alpha + j\beta)$,
si $\alpha$ et $\beta$ sont les parties réelle et imaginaire de l'expression exp

$$\{j.2\pi.\frac{k.m}{N}\}$$

Le développement du produit montre qu'il est équivalent à :
$(R\alpha - I\beta) + j\,(R\beta + I\alpha)$

Sur la figure 2, on a représenté un opérateur 10 réalisant cette dernière opération.

Il comporte quatre tables 51-54, mémorisées par exemple dans des mémoires du type ROM, recevant les deux premières la donnée R et les deux dernières la donnée I. Elles reçoivent en outre chacune la valeur de $\underline{m}$, cette dernière étant bien entendu exprimée modulo N. Ces mémoires fournissent les grandeurs $R\alpha$, $R\beta$, $-I\beta$ et $I\alpha$, respectivement. La première et la troisième de ces informations sont additionnées dans un additionneur 55 pour former la partie réelle R' de la grandeur $x'_{m+N}$ .Les deuxième et quatrième de ces informations sont additionnées dans un additionneur 56 pour former la partie imaginaire I' de la grandeur $x'_{m+N}$.

Dans une variante de réalisation, il est possible de n'utiliser que deux mémoires et un seul additionneur: celles-ci fournissent, sur commande extérieure, dans un premier temps, les grandeurs $R\alpha$ et $-I\beta$ qui, additionnées, forment la partie réelle R' ; dans un deuxième temps, les mémoires fournissent les deux autres grandeurs ($R\beta$ et $I\alpha$) qui sont additionnées à leur tour pour donner I'.

Il est à noter que cet exemple de réalisation ne nécessite pas de multiplieur. Bien entendu, d'autres réalisations sont possibles, notamment qui utilisent un multiplieurs.

Un tel opérateur 10 peut être utilisé pour réaliser l'opérateur 6 comme l'opérateur 1 de la figure 1, sous réserve, pour le premier, de recevoir la valeur m+1 au lieu de $\underline{m}$, ou d'en tenir compte dans la constitution des tables 51-54, et pour le dernier de tenir compte du signe "moins" dans ces mêmes tables.

Ainsi qu'il est dit ci-dessus, un dispositif de calcul tel que celui décrit sur la figure 1 peut être utilisé dans une chaîne de traitement d'un radar à compression d'impulsion pour constituer un filtre adapté.

On rappelle que le traitement optimal qu'on puisse faire subir à un signal dans le bruit est de le faire passer par un filtre "adapté" au signal, c'est-à-dire un filtre dont la transmittance est le conjugué du spectre dudit signal.

Par ailleurs, on rappelle que la compression d'impulsions est un procédé ayant pour but d'améliorer le pouvoir de résolution en distance d'un radar tout en permettant d'avoir une durée T grande de l'impulsion. Ce procédé consiste à disposer une ligne dispersive (en fréquence) sur la chaîne d'émission du radar, qui a pour effet d'allonger (ou de "dilater") le signal, et de compenser cet effet à la réception, c'est-à-dire de comprimer le signal reçu. En pratique, pour des raisons de résistance à l'effet Doppler, pour réaliser le signal "dilaté" on choisit souvent une rampe de fréquence, c'est-à-dire une modulation linéaire de fréquence. Le problème qui se pose alors à la réception est de réaliser un filtre qui soit adapté à la rampe de fréquence en question. C'est le problème qui est envisagé ci-après.

Enfin, lorsqu'on utilise des techniques numériques, on cherche souvent à réaliser une approximation de la rampe de fréquence telle qu'elle facilite l'opération de filtrage adapté réalisée ultérieurement. Une forme de cette approximation est connue sous le nom de code de Frank. On rappelle qu'on entend par "code" un signal dont les caractéristiques peuvent varier dans le temps, cette variation étant déterministe ou pseudo-aléatoire (connue de l'émetteur). On rappelle également que l'approximation de Frank s'écrit :

$$x(t) = \exp\{\, j.2\pi.f(t).t\,\}$$

$$\text{où :} \quad . \, t \in [\,0\,;\,T\,[\,;$$

$$. \, f \in [\,0\,;\,B\,[ \quad \text{et} \quad f(t) = \frac{k(t)}{N}\, B\,;$$

$$. \text{ B est la bande de fréquence du signal } x(t).$$

Le signal x(t) se présente donc comme illustré figure 4 : une série de N marches d'escalier s'étendant dans le temps sur une durée T, chaque marche, ou palier, d'ordre $\underline{i}$ étant caractérisé par une fréquence

$$\frac{iB}{N}$$

et une durée

$$\frac{T}{N}.$$

On choisit, avec les notations précédentes :
BT = N²

$$f_e = B \longleftrightarrow \tau = \frac{1}{B}\,,$$

ce qui conduit à avoir un nombre entier de sinusoïdes complexes par palier et les différents paliers se raccordent donc sans saut de phase. En outre, ayant N paliers, on a N échantillons par palier.

Il est connu de réaliser le filtrage adapté des codes de Frank à l'aide des algorithmes de transformée de Fourier rapide (FFT pour "Fast Fourier Transform" en anglais) en posant $N=2^q$, ce qui conduit à :
B.T = $(2^q)^2$ ;
en effet, les algorithmes de FFT sont plus particulièrement adaptés aux puissances de 2.

Toutefois, dans ce cas, le nombre de taux de compression autorisés est limité (on rappelle que le taux de compression est donné par le produit B.T). Par exemple, pour N entier compris entre 1 et 16, les seuls taux de compression autorisés sont 1, 4, 16, 64 et 256. Cela constitue un inconvénient principalement pour les deux raisons suivantes :
- le fait d'être limité à quelques valeurs précises du produit BT est gênant du fait que le choix de chacun des paramètres B et T n'est pas libre : la durée T est conditionnée par la puissance et la portée souhaitées pour le radar, alors que la bande de fréquence B est conditionnée par la résolution souhaitée ;
- l'écart entre les différents taux de compression possibles est très grand pour les valeurs élevées du produit BT or, dans certaines applications (les radars multimodes), on souhaite faire varier ces paramètres de façon plus fine.

Selon l'invention, pour réaliser un filtre adapté à chaque palier, on utilise une DFT glissante telle que définie par les expressions (1), (2) et (3) ci-dessus. En effet, on montre ci-après que la transformée de Fourier discrète et glissante est le filtre adapté à un signal formé d'un nombre entier de sinusoïdes complexes.

Démonstration : Soit un signal x(t) constitué d'un nombre entier de sinusoïdes complexes :

$$x(t) = \exp\{\, j.2\pi.f.t\,\}$$

$$\text{avec :} \quad . \, t \in [\,0\,;\,T\,[$$

$$. \, f = k \cdot \frac{1}{T}$$

Si on choisit une fréquence d'échantillonnage $f_e$ telle que :

$$f_e = N \cdot \frac{1}{T} \quad (\text{avec } N > k_{max}),$$

on peut écrire le signal échantillonné x'(t) sous la forme :

$$x'(t) = \sum_{n=0}^{N-1} x_n \cdot \delta(t-n\tau) \qquad (6)$$

où : . $\delta$ est la fonction de Dirac
. $\tau$ est la période d'échantillonnage ($\tau = 1/f_e$)
. $x_n$ est le signal x(t) échantillonné à la $n^{ème}$ période ($\tau$)
d'échantillonnage :

$$x_n = \exp\{j.2\pi.f.n.\tau\}$$

$$= \exp\{j.2\pi.\frac{k.n}{N}\} \qquad (7)$$

La transmittance H(f) du filtre adapté au signal échantillonné x'(t) est le complexe conjugué du spectre X'(f) de ce signal :

$$H(f) = \overline{X'(f)}$$

ou, dans le domaine temporel :

$$h(t) = \overline{x'(-t)}, \qquad (8)$$

h(t) étant la transformée de Fourier de la transmittance H(f).
Des expressions (6), (7) et (8), on déduit :

$$h(t) = \sum_{n=0}^{N-1} \exp\{-j.2\pi.\frac{k.n}{N}\} \cdot \delta(-t-n\tau) \qquad (9)$$

Si on applique un signal e(t) à un filtre dont la réponse est donnée par l'expression (9), on obtient en sortie du filtre un signal s(t) défini par :

$$s(t) = h(t) * e(t)$$

où le signe * représente un produit de convolution, c'est-à-dire que :

$$s(t) = \int_{-\infty}^{+\infty} e(t-u) \cdot h(u) \cdot du$$

En remplaçant dans cette dernière expression h(u) par sa valeur donnée par l'expression (9), on obtient :

$$s(t) = \sum_{n=0}^{N-1} \left\{ \int_{-\infty}^{+\infty} e(t-u) \cdot \delta(-u-n\tau) \cdot du \right\} \cdot \exp\{-j.2\pi.\frac{k.n}{N}\}$$

$$= \sum_{n=0}^{N-1} e(t+n\tau) \cdot \exp\{-j.2\pi.\frac{k.n}{N}\}$$

Si on considère seulement le signal de sortie après échantillonnage, c'est-à-dire s(m$\tau$), noté $s_m$, on a :

$$s_m = \sum_{n=0}^{N-1} e_{m+n} \cdot \exp\left\{-j.2\pi.\frac{k.n}{N}\right\}$$

Cette expression est de la même forme que l'expression (4) ci-dessus, c'est-à-dire que le signal de sortie (s) s'obtient en réalisant une DFT glissante sur le signal d'entrée (e).

Selon l'invention, on réalise donc une compression d'impulsions dans une chaîne radar à partir du dispositif décrit figure 1.

La figure 3 rappelle schématiquement la constitution d'une chaîne de réception et de traitement d'un signal radar à compression d'impulsion dans laquelle le dispositif selon l'invention est susceptible d'être inséré.

Le signal radar est reçu sur une antenne 20 et il est dirigé, par l'intermédiaire d'un duplexeur 21, à la partie réception du radar. Cette partie réception comporte principalement, en cascade :

un récepteur hyperfréquence 22 ;

un ensemble 23 de circuits de changement de fréquence, assurant la transposition du signal reçu en hyperfréquence en un signal en fréquence intermédiaire (FI) ;

- un dispositif 24 de démodulation d'amplitude et de phase (DAP) ;

un convertisseur analogique-numérique (CAN) 25, assurant la numérisation du signal radar ;

un filtre adapté 26 ;

un ensemble 27 de circuits assurant, le cas échéant, les traitements Doppler.

Il est à noter que le filtre adapté 26 peut être éventuellement placé après les circuits de traitements Doppler 27 . Dans le même ordre d'idée, lorsque le démodulateur 24 est réalisé numériquement, il peut être placé à un endroit quelconque de la chaîne, bien entendu après le convertisseur 25.

Selon l'invention, le filtre adapté 26 est réalisé par un dispositif de calcul d'une transformée de Fourier discrète et glissante telle que définie par les équations (1), (2) et (3), lorsque le signal émis est une rampe de linéaire de fréquence dans lequel le produit BT est égal au carré d'un nombre entier ($N^2$), l'avantage de cette réalisation étant la possibilité de prendre un nombre N quelconque.

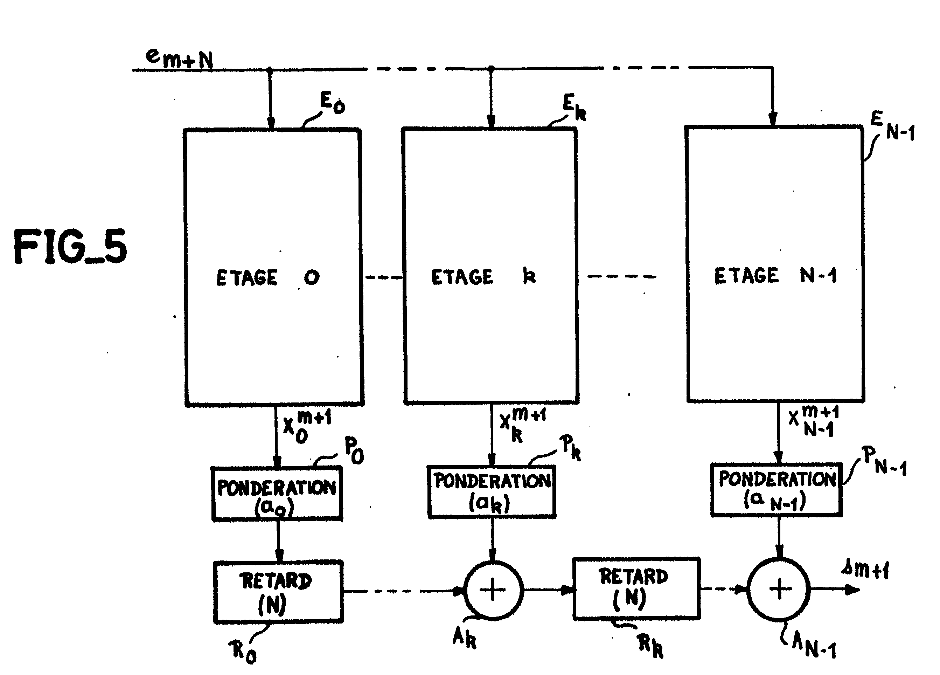

La figure 5 représente un mode de réalisation de ce filtre.

Sur la figure 5, on retrouve N étages $E_0$... $E_k$.... $E_{N-1}$ qui reçoivent en parallèle un échantillon $e_{m+N}$ du signal d'entrée. L'étage $E_k$ fournit à sa sortie la quantité

$$X_k^{m+1} .$$

Chacune des quantité

$$X_k^{m+1}$$

est sommée (additionneur $A_k$) à la quantité précédente

$$X_{k-1}^{m+1}$$

après avoir subi un retard $R_k$ égal à N périodes d'échantillonnage. Le circuit $R_k$ est réalisé par exemple à l'aide d'un registre à décalage N étages. La sommation est réalisée jusqu'au dernier étage ($E_{N-1}$) pour produire le signal de sortie $s_{m+1}$.

L'insertion d'un retard de N périodes au niveau de chaque étage E est rendue nécessaire par le fait qu'avec le système de la figure 5, on calcule simultanément le premier point de chacun des N palliers qui sont séparés les uns des autres par N périodes d'échantillonnage ; pour obtenir le signal $\underline{s}$, il est donc nécessaire d'effectuer une correction. Bien entendu cette correction n'est nécessaire que dans le cas où les N palliers sont émis successivement. S'ils sont émis simultanément, les retards $R_k$ ne sont plus utiles.

En outre, dans le mode de réalisation représenté figure 5, un dispositif de pondération $P_k$ est interposé entre la sortie de l'étage $E_k$ et l'additionneur $A_k$. Il s'agit d'une pondération d'amplitude, optionnelle, dont l'objet est d'abaisser le niveau des lobes secondaires. Toutefois, elle engendre des pertes du fait qu'on s'écarte alors du filtre adapté théorique.

## Revendications

1. Dispositif de calcul d'une transformée de Fourier discrète et glissante sur une fenêtre temporelle de durée T, fournissant au moins une composante

$$(X_k^{m+1})$$

de ladite transformée à partir de N échantillons ($x_{m+N}$) d'un signal d'entrée dont on veut calculer la transformée ; le dispositif de calcul étant caractérisé par le fait qu'il comporte au moins un étage ($E_k$) recevant les échantillons et comportant des opérateurs de rotation complexe (1, 6), des moyens d'addition et/ou de soustraction (3, 4) et des circuits de retard (2, 5), fournissant ladite composante

$$(X_k^{m+1})$$

définie par :

$$X_k^m = X'^m_k \cdot \exp\{ j.2\pi. \frac{m.k}{N} \} \tag{1}$$

avec :

$$X'^{m+1}_k = X'^m_k + x'_{m+N} - x'_m \tag{2}$$

$$x'_m = x_m.\exp \{- j.2\pi.\frac{m.k}{N} \} \tag{3}$$

où $\underline{k}$ est l'indice de l'étage et $\underline{m}$, l'indice de la fenêtre.

2. Dispositif selon la revendication 1, caractérisé par le fait qu'il comporte N étages identiques, montés en parallèle.

3. Dispositif selon l'une des revendications précédentes, caractérisé par le fait que chaque étage ($E_k$) comporte :
- un premier opérateur de rotation complexe (1), recevant successivement lesdits échantillons ($x_{m+N}$) et leur faisant subir une opération de rotation complexe permettant d'obtenir la grandeur ($x'_{m+N}$) définie par l'équation (3) ;
- un premier circuit de retard (2) recevant la grandeur ($x'_{m+N}$) issue du premier opérateur (1) et le retardant de N périodes d'échantillonnage ;
- des moyens de soustraction (3) de la grandeur ($x'_{m+N}$) issue du premier circuit de retard (2) à celle issue du premier opérateur (1) ;
- des moyens d'addition (4) de la grandeur issue des moyens précédents (3) à celle

$$(X'^{m+1}_k)$$

précédemment calculée par ces moyens d'addition ;
- un deuxième circuit de retard (5) recevant la grandeur

$$(X'^{m+1}_k)$$

issue des moyens d'addition (4), la retardant d'une période d'échantillonnage et la fournissant alors aux moyens d'addition ;
- un deuxième opérateur de rotation complexe (6), recevant la grandeur

$$(X'^{m+1}_k)$$

issue des moyens d'addition (4) et lui faisant subir une rotation complexe permettant d'obtenir ladite composante

$$(X_k^{m+1})$$

définie par l'équation (1).

4. Dispositif selon la revendication 3, caractérisé par le fait que le premier et/ou le deuxième opérateur de rotation complexe comporte quatre mémoires, recevant la partie réelle ou la partie imaginaire de la composante à laquelle il faut faire subir la rotation complexe exp

$$\{ j.2\pi.\frac{k.m}{N} \}$$

ainsi que la valeur de l'indice $\underline{m}$, et fournissant en sortie le produit des grandeurs qu'elles ont reçu en entrée par la partie réelle ou la partie imaginaire de l'exponnentielle ci-dessus, les sorties des mémoires étant sommées de façon à fournir la partie réelle et la partie imaginaire de la grandeur de sortie.

5. Application du dispositif de calcul selon l'une des revendications précédentes à un système radar, ce dernier comportant une chaîne de réception du signal radar, elle-même comportant des moyens pour réaliser un filtrage adapté et une compression d'impulsion, caractérisée par le fait que ces moyens sont réalisés à l'aide dudit dispositif de calcul.

6. Application selon l'une des revendications 2 et 5, caractérisé par le fait que les sorties des différents étages, affectées chacune d'un retard ($R_k$) par rapport à la sortie de l'étage précédent, sont sommées ($A_k$).

7. Application selon l'une des revendications 5 ou 6, caractérisé par le fait que les sorties des différents étages sont pondérées en amplitude.

**Claims**

1. A device for computing a discrete and slidable Fourier transform over a time window having a period T, adapted to deliver at least one component

$$(X_k^{m+1})$$

of said transform from N samples ($x_{m+N}$) of an input signal, whose transform is to be computed, characterized in that it comprises at least one stage ($E_k$) adapted to receive the samples and comprising operators performing a complex rotation (1, 6), adding and/or subtracting means (3, 4) and delay circuits (2, 5) adapted to deliver said component

$$(X_k^{m+1})$$

as defined by:

$$X_k^m = X'^m_k . \exp\{ j.2\pi. \frac{m.k}{N} \} \qquad (1)$$

wherein:

$$X'^{m+1}_k = X'^m_k + x'_{m+N} - x'_m \qquad (2)$$

$$x'_m = x_m.\exp \{- j.2\pi.\frac{m.k}{N} \} \qquad (3)$$

and wherein k is the stage index and m is the window index.

2. A device according to claim 1, characterized in that it comprises N identical stages connected in parallel.

3. A device according to one of the preceding claims, characterized in that each of the stages ($E_k$) comprises:

— a first complex rotation operator (1) adapted to receive said samples ($x_{m+N}$) consecutively and to impart a complex rotation upon them in order to obtain the quantity ($x'_{m+N}$) as defined by equation (3);

— a first delay circuit (2) adapted to receive the quantity ($x'_{m+N}$) output by the first operator (1) and delaying said quantity by N sampling periods;

— subtracting means (3) for subtracting the quantity ($x'_{m+N}$) output by the first delay circuit (2) from the quantity output from the first operator (1);

— adding means (4) for adding the quantity output by the preceding means (3) to the quantity

$$(X'^{m+1}_k)$$

as previously calculated by said adding means;
— a second delay circuit (5) adapted to receive the quantity

$$(X'^{m+1}_k)$$

output by the adding means (4), to delay the quantity by one sampling period and to deliver it to the adding means; and
— a second complex rotation operator (6) adapted to receive the quantity

$$(X'^{m+1}_k)$$

output by the adding means (4) and to impart a complex rotation upon them in order to obtain said component

$$(X'^{m+1}_k)$$

as defined by the equation (1).

4. A device according to claim 3, characterized in that the first and/or second complex rotation operator comprises four memory units adapted to receive the real component and the imaginary part of the component which has to be subjected to the complex rotation exp {j2π.k.m/N} and to receive the value of index m, and adapted to output the product of the quantities received by said memory units at their inputs by virtue of the real part and the imaginary part of the above quoted exponential function, the output quantities of the memories being added such as to provide the real and the imaginary part of the output quantity.

5. The application of the computing device according to one of the preceding claims to a radar system, the latter comprising a radar signal reception chain, which in turn includes means for implementing an adapted filtering and pulse compression, characterized in that said means are realized by means of said computing device.

6. The application according to one of claims 2 and 5, characterized in that the output quantities of the different stages, each being subjected to a delay ($R_k$) in relation to the preceding stage, are added ($A_k$).

7. The application according to one of the claims 5 or 6, characterized in that the output quantities of the different stages are amplitude-weighted.

## Patentansprüche

1. Einrichtung zum Berechnen einer diskreten und gleitenden Fouriertransformierten über ein Zeitfenster von der Dauer T, die mindestens eine Komponente

$$(X^{m+1}_k)$$

der Transformierten aus N Tastproben ($x_{m+n}$) eines Eingangssignals liefert, wovon die Transformierte berechnet werden soll, dadurch gekennzeichnet, daß die Einrichtung mindestens eine Stufe ($E_k$), welche die Proben empfängt und Operatoren (1, 6) zur Durchführung einer komplexen Drehung besitzt, Addier- und/oder Subtrahiermittel (3, 4), und Verzögerungsschaltungen (2, 5) aufweist, welche die Komponente

$$(X^{m+1}_k)$$

liefern, die definiert ist durch:

$$X^m_k = X'^m_k . \exp\{ j.2\pi. \frac{m.k}{N} \} \tag{1}$$

mit:

$$X'^{m+1}_k = X'^m_k + x'_{m+N} - x'_m \tag{2}$$

$$x'_m = x_m \cdot \exp\left\{-j.2\pi.\frac{m.k}{N}\right\} \tag{3}$$

wobei k der Index der Stufe, und m der Index des Fensters ist.

2. Einrichtung nach Anspruch 1, dadurch gekennzeichnet, daß sie N identische, parallelgeschaltete Stufen aufweist.

3. Vorrichtung nach einem der vorhergehenden Ansprüche, dadurch gekennzeichnet, daß jede Stufe ($E_k$) aufweist:

– einen ersten Operator (1) zur Durchführung einer komplexen Drehung, der nacheinander die Proben ($x_{m+N}$) empfängt und einer komplexen Drehung zur Gewinnung der durch die Gleichung (3) definierten Größe ($x'_{m+N}$) unterzieht,

– eine erste Verzögerungsschaltung (2), welche die vom ersten Operator (1) gelieferte Größe ($x'_{m+N}$) empfängt und um N Tastperioden verzögert,

– Subtrahiermittel (3) zum Subtrahieren der von der ersten Verzögerungsschaltung (2) gelieferten Größe ($x'_{m+N}$) von der vom ersten Operator (1) gelieferten Größe,

– Addiermittel (4) zum Addieren der von den vorhergehenden Mitteln (3) gelieferten Größe zu der von diesen Addiermitteln vorher errechneten Größe

$$(X'^{m+1}_k),$$

– eine zweite Verzögerungsschaltung (5), welche die von den Addiermitteln (4) gelieferte Größe

$$(X'^{m+1}_k)$$

empfängt, um eine einzelne Tastperiode verzögert und dann an die Addiermittel liefert, und

– einen zweiten Operator (6) zur Durchführung einer komplexen Drehung, welcher die von den Addiermitteln (4) gelieferte Größe

$$(X'^{m+1}_k)$$

empfängt und einer komplexen Drehung zur Gewinnung der durch die Gleichung (1) definierten Komponente

$$(X^{m+1}_k)$$

unterzieht.

4. Einrichtung nach Anspruch 3, dadurch gekennzeichnet, daß der erste oder der zweite Operator zur Durchführung der komplexen Drehung vier Speicher aufweist, welche den Real- oder den Imaginärteil derjenigen Komponente, die der komplexen Drehung exp $\{j.2\pi.(k.m/N)\}$ unterzogen werden soll, sowie den Indexwert m empfangen, und welche am Ausgang das Produkt der Größen liefern, die sie am Eingang in Form des Real- oder Imaginärteils der vorstehenden Exponentialfunktion empfangen hat, wobei die Speicherausgänge derart summiert werden, daß sie den Real- und den Imaginärteil der Ausgangsgröße liefern.

5. Verwendung der Recheneinrichtung nach einem der vorhergehenden Ansprüche bei einem Radarsystem, das eine Empfangskette des Radarsystems aufweist, die ihrerseits Mittel zur angepaßten Filterung und zur Impulskompression aufweist, dadurch gekennzeichnet, daß diese Mittel mit Hilfe der genannten Recheneinrichtung verwirklicht sind.

6. Verwendung nach einem der Ansprüche 2 und 5, dadurch gekennzeichnet, daß die Ausgänge der verschiedenen Stufen, die je einer Verzögerung ($R_k$) in Bezug auf den Ausgang der vorhergehenden Stufe unterzogen ist, summiert werden ($A_k$).

7. Verwendung nach einem der Ansprüche 5 oder 6, dadurch gekennzeichnet, daß die Ausgänge der verschiedenen Stufen amplitudenmäßig gewichtet sind.

EP 0 219 392 B1

# FIG_1

# FIG_2

# FIG_3

# FIG_4

EP 0 219 392 B1

FIG_5

EP 0 219 392 B1